(19) Europäisches Patentamt
European Patent Office
Office européen des brevets

(11) Veröffentlichungsnummer: **0 031 070**
**B1**

(12) # EUROPÄISCHE PATENTSCHRIFT

(45) Veröffentlichungstag der Patentschrift: **18.05.83**

(51) Int. Cl.³: **C 09 B 11/10,** D 21 H 3/80

(21) Anmeldenummer: **80107749.6**

(22) Anmeldetag: **09.12.80**

(54) **Kationische Farbstoffe und deren Verwendung zum Färben von Papierstoffen.**

(30) Priorität: **20.12.79 DE 2951353**

(43) Veröffentlichungstag der Anmeldung: **01.07.81 Patentblatt 81/26**

(45) Bekanntmachung des Hinweises auf die Patenterteilung: **18.05.83 Patentblatt 83/20**

(84) Benannte Vertragsstaaten: **BE CH DE FR GB IT LI**

(56) Entgegenhaltungen:
**DE-A-2 338 151**
**DE-C-109 883**
**FR-A-2 401 958**
**US-A-1 629 885**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Bruder, Horst, Dr., Dubliner Strasse 25, D-6700 Ludwigshafen (DE)**
Erfinder: **Degen, Hans-Juergen, Dr., Schillerstrasse 6, D-6143 Lorsch (DE)**
Erfinder: **Feichtmayr, Franz, Dr., Mundenheimer Strasse 158, D-6700 Ludwigshafen (DE)**
Erfinder: **Grychtol, Klaus, Dr., Seebacher Strasse 96A, D-6702 Bad Duerkheim (DE)**
Erfinder: **Mayer, Udo, Dr., Max-Slevogt-Strasse 27, D-6710 Frankenthal (DE)**

**EP 0 031 070 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Kationische Farbstoffe und deren Verwendung zum Färben von Papierstoffen

Die Erfindung betrifft Verbindungen der allgemeinen Formel I

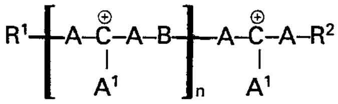

I,

$(n+1)A^{\ominus}$

in der die Reste A, $A^1$ und B gleich oder verschieden sind und wobei

A gegebenenfalls substituiertes Arylen oder Heteroarylen,

$A^1$ für $n=1$ gegebenenfalls substituiertes Heteroaryl oder gegebenenfalls durch Alkyl, Aryl, Cycloalkyl, Chlor, Brom, Hydroxy, Alkoxy, Aryloxy, Nitro, Hydroxycarbonyl, Alkoxycarbonyl oder Aminocarbonyl substituiertes Aryl und für $n>1$ darüberhinaus durch gegebenenfalls substituiertes Amino substituiertes Aryl,

B ein Brückenglied der Formel 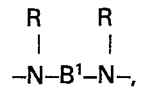, in dem die Reste R gleich oder verschieden sind und Wasserstoff, gegebenenfalls durch Chlor, Brom, Hydroxy, $C_1$–$C_4$-Alkoxy, Phenyl oder Tolyl substituiertes $C_1$- bis $C_4$-Alkyl, Cycloalkyl, Phenyl oder Tolyl und

$B^1$ ein gegebenenfalls quaterniertes Brückenglied bedeuten,

$R^1$ und $R^2$ Wasserstoff, gegebenenfalls substituiertes Alkyl, Cycloalkyl, Aryl, Alkoxy oder Amino,

n eine ganze Zahl und

$A^{\ominus}$ ein Anion bedeuten.

Die Reste A entstammen vorzugsweise der Benzolreihe, einzelne Reste sind beispielsweise:

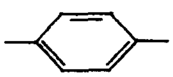 , 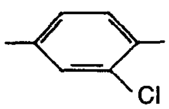 , 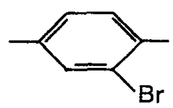 , 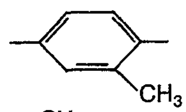 , 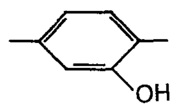 ,

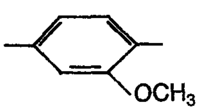 , 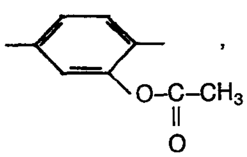 , 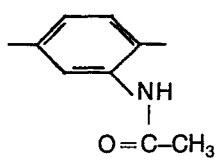 , 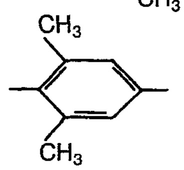 , 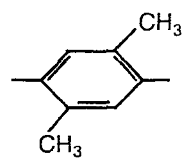 ,

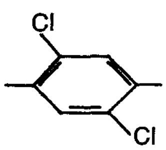 , 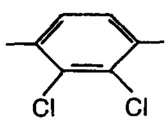 oder 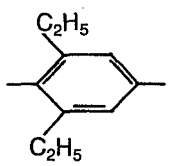 .

Die Reste $R^1$–A und $R^2$–A entsprechen daneben z.B. den Formeln

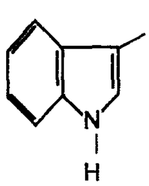 , 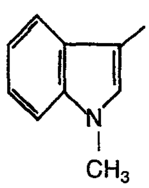 , 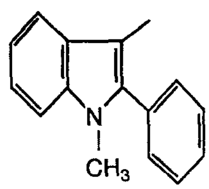 , 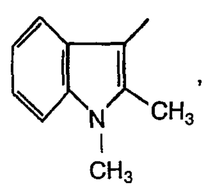 , 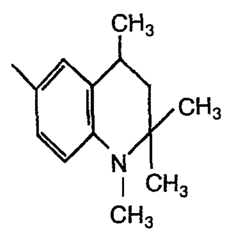

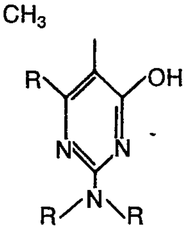 oder 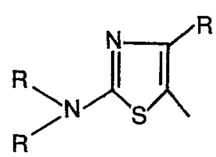 ,

wobei R die angegebene Bedeutung hat.

Für $A^1$ kommen insbesondere folgende Reste in Betracht:

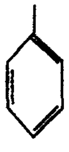 , 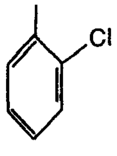 , 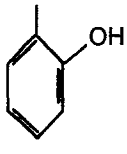 , 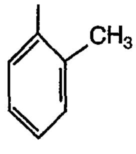 , 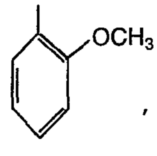 , 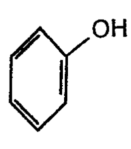 ,

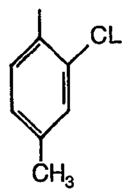, 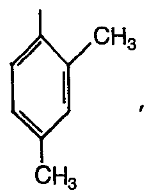, 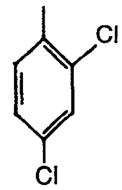, 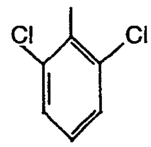, 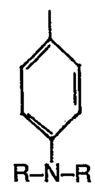, 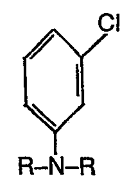, 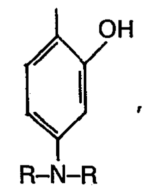,

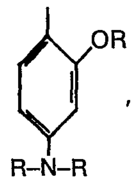, 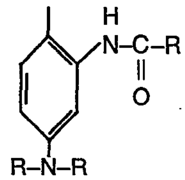, 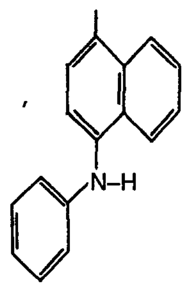, 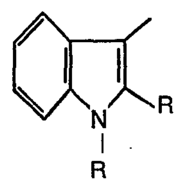, 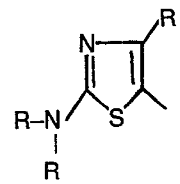 oder 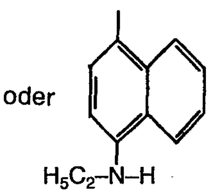,

Brückenglieder $B^1$ können symmetrisch und unsymmetrisch sein. Es kommen sowohl aliphatische wie auch aromatische und Heteroatome enthaltende Reste in Betracht, z.B. sind gegebenenfalls durch Sauerstoff-, –NH– oder Schwefel, Carbamoyl, Carbonyloxy, $-N(R)-C(=O)-N-$ oder $-O-C(=O)-N(R)-$ unterbrochene gegebenenfalls substituierte Alkylenreste, gegebenenfalls substituierte Phenylen-, Diphenylen- oder Naphthylenreste oder gesättigte, gegebenenfalls Heteroatome enthaltende Cycloalkylenreste zu nennen. Im einzelnen seien für $B^1$ beispielsweise aufgeführt:

$C_2H_4OCOOC_2H_4$
$C_3H_6PCPPC_3H_6$
$C_2H_4HNCONHC_2H_4$
$C_3H_6HNCONHC_3H_6$
$C_2H_4OCONHC_6H_4NHCOOC_2H_4$
$C_3H_6OCONHC_6H_4NHCOOC_3H_6$

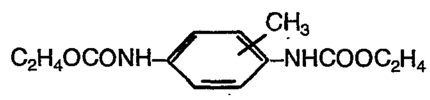

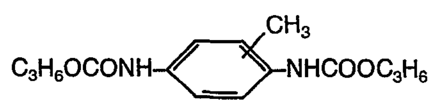

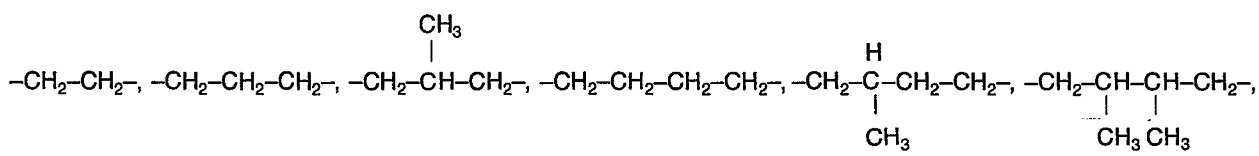

$-CH_2-CH_2-CH_2-CH_2-CH_2-$, $-CH_2-CH_2-CH_2-CH_2-CH_2-CH_2-$, $-CH_2-CH_2-O-CH_2-CH_2-$,

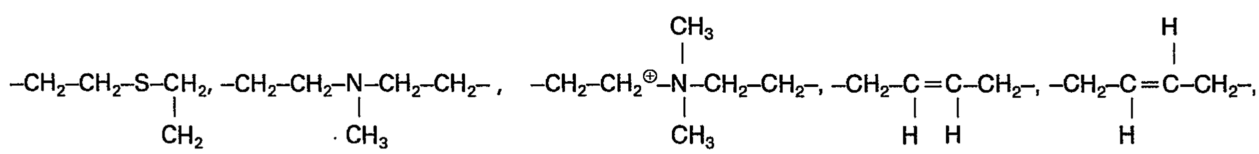

$-CH_2-CH_2-CH=CH-CH_2-$, $-CH_2-C\equiv C-CH_2-$, 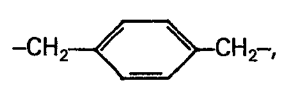, 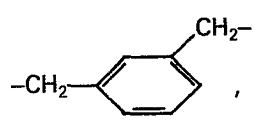, 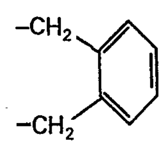,

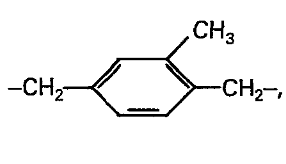, 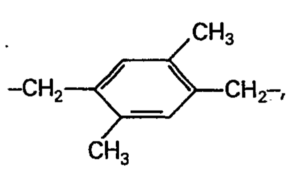, 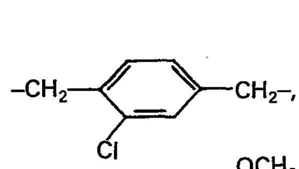, 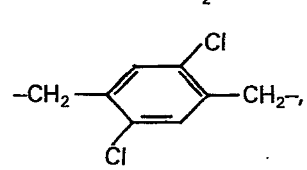,

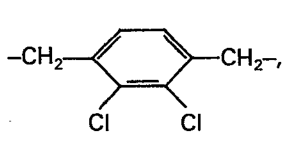, 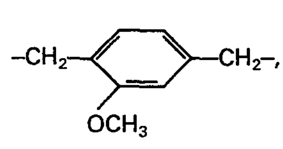, 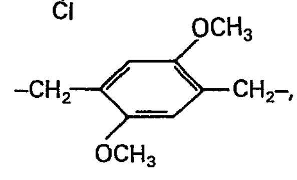, 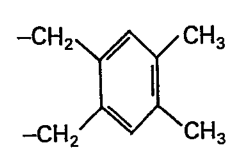,

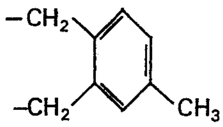, 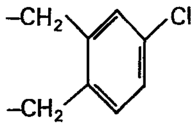, 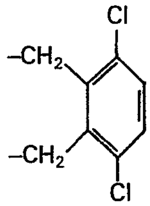, 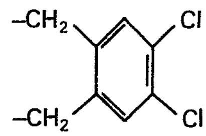,

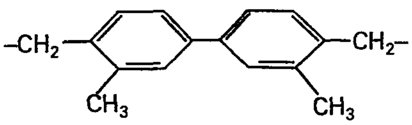, 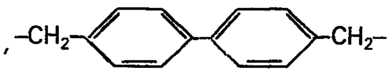, 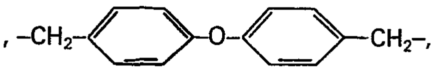,

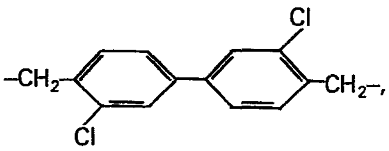, 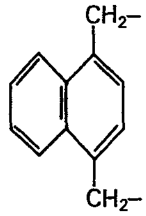, 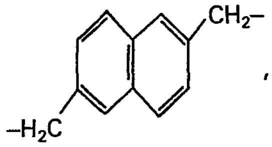, oder 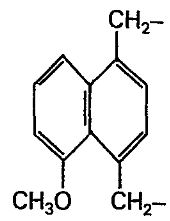,

$-CH_2-CH_2-O-CH_2-CH_2-CH_2-$, 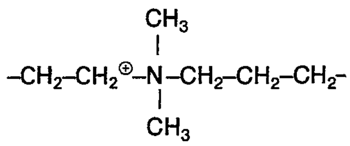, 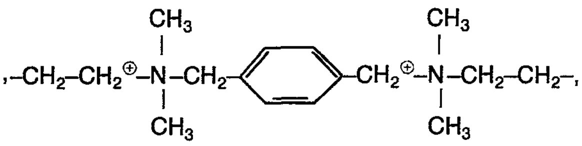,

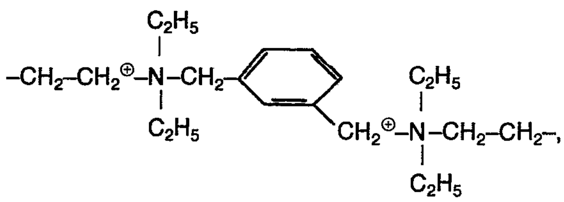 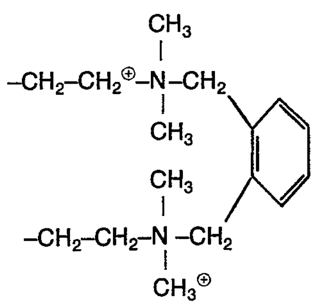, 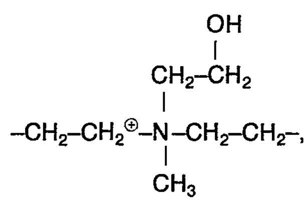

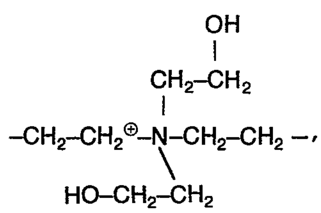 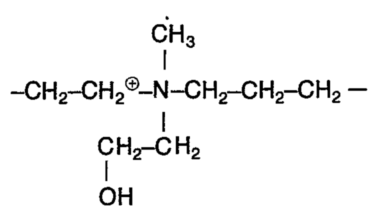

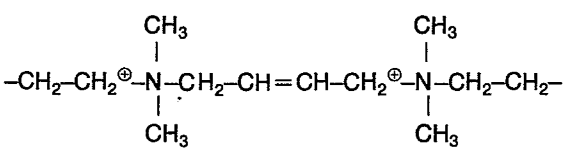 oder 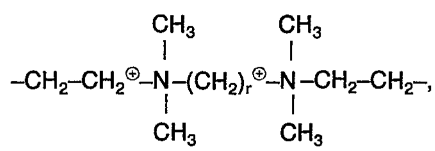

wobei r eine Zahl von 2–8, vorzugsweise 2–4 bedeutet.

Weiterhin sind zu nennen:

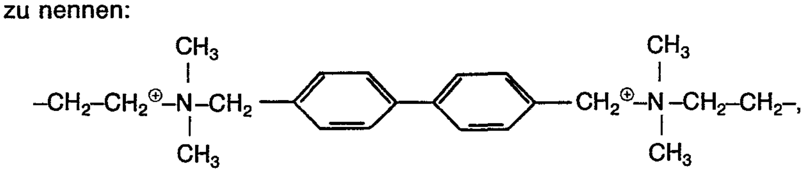

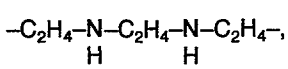 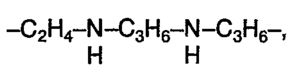 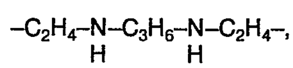 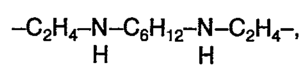

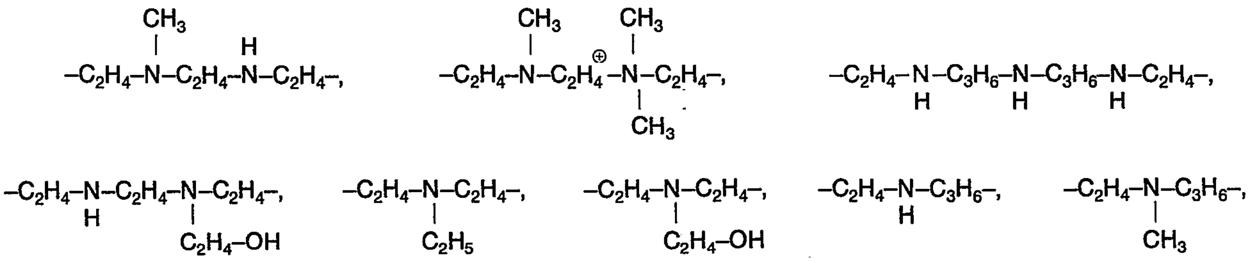

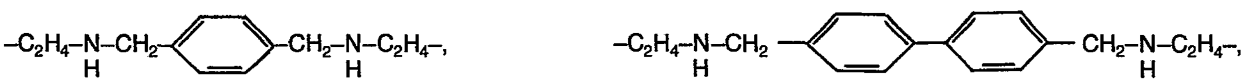

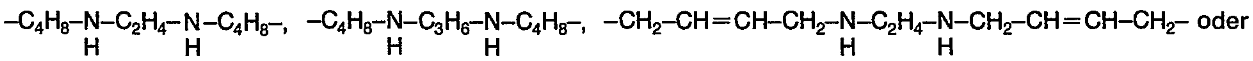 oder

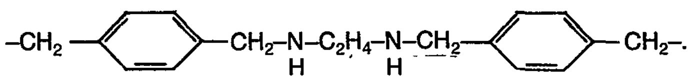

Reste R sind neben Wasserstoff im einzelnen beispielsweise: Methyl, Äthyl, n- und iso-Propyl, n- und iso-Butyl, Hydroxyäthyl, 2-Chloräthyl, Dimethylaminoäthyl, Methoxyäthyl, Äthoxyäthyl, Methoxyäthoxyäthyl, Phenoxyäthoxyäthyl, Benzyl, Xylyl, Triäthylammoniumäthyl, Benzyldimethylammoniumäthyl, Phenyl oder Tolyl.

Einzelne Reste $R^1$ und $R^2$ sind z.B.:

Wasserstoff, Methyl, Äthyl, Hydroxyäthyl, Methoxyäthyl, 2-Chloräthyl, Phenyl, Tolyl, Benzyl, Amino, Methylamino, Dimethylamino, Diäthylamino, Dipropylamino, Dibutylamino, Methyläthylamino, Phenyl-äthylamino, Benzyl-methylamino, Tolyl-methylamino, Phenylamino, Tolylamino, Hydroxyäthylmethylamino, Chloräthyläthylamino, Acetyloxyäthylmethylamino oder 3-Chlor-2-hydroxyäthyl-methyl amino.

Ferner kommen cyclische aliphatische Aminreste der Formeln

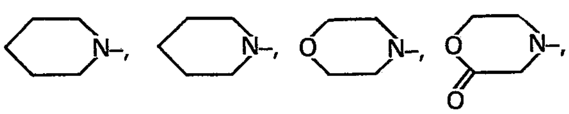

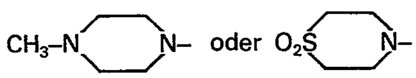 in Betracht.

Als Anionen kommen z.B. in Betracht:

Fluorid, Chlorid, Bromid, Jodid, Perchlorat, Hydrogensulfat, Sulfat, Bisulfat, Aminosulfat, Nitrat, Dihydrogenphosphat, Hydrogenphosphat, Phosphat, Hydrogencarbonat, Carbonat, Methosulfat, Äthosulfat, Cyanat, Thiocyanat, Tetrachlorozinkat, Borat, Tetrafluoroborat, Acetat, Chloracetat, Cyanacetat, Hydroxyacetat, Aminoacetat, Methylaminoacetat, Di- und Tri-chloracetat, 2-Chlorpropionat, 2-Hydroxypropionat, Glycolat, Thioglycolat, Thioacetat, Phenoxyacetat, Trimethylacetat, Valerat, Palmitat, Acrylat, Oxalat, Malonat, Crotonat, Succinat, Zitronat, Methylenbisthioglycolat, Äthylenbisiminoacetat, Nitrilotriacetat, Fumarat, Maleat, Benzoat, Methylbenzoat, Chlorbenzoat, Dichlorbenzoat, Hydroxybenzoat, Aminobenzoat, Phthalat, Terephthalat, Indolylacetat, Chlorbenzolsulfonat, Benzolsulfonat, Toluolsulfonat, Biphenylsulfonat und Chlortoluolsulfonat.

Zur Herstellung der Verbindungen der Formel I kann man z.B. Verbindungen der Formel II

$$R^1-[-A-CH_2-A-B-]_n-A-CH_2-A-R^2 \qquad II$$

mit einer Verbindung der Formel III

$$A^1-H \qquad III$$

in Gegenwart eines geeigneten Oxidationsmittels umsetzen.

Verbindungen der Formel I mit n=1 werden erhalten, wenn man das Harnstoffaddukt IV

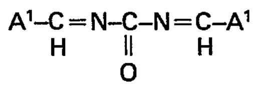 IV

zunächst mit 1/2 Moläquivalent der Verbindung

HA–B–AH und

anschliessend bei erhöhter Temperatur mit 1/2 Moläquivalent einer Verbindung der Formel

$R^1$–AH

umsetzt und die so erhaltene Leukoverbindung der Formel V

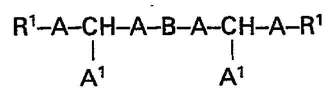

mit einem geeigneten Oxidationsmittel oxidiert.

Verbindungen der Formel I mit n>1 werden erhalten, wenn man Harnstoffaddukte der Formel IV mit einem Moläquivalent der Verbindung

HA–B–AH

umsetzt.

Einzelheiten der Herstellung können den Beispielen entnommen werden, in denen sich Angaben über Teile und Prozente, sofern nicht anders vermerkt, auf das Gewicht beziehen.

Von besonderer Bedeutung sind z.B. Verbindungen der Formel Ia

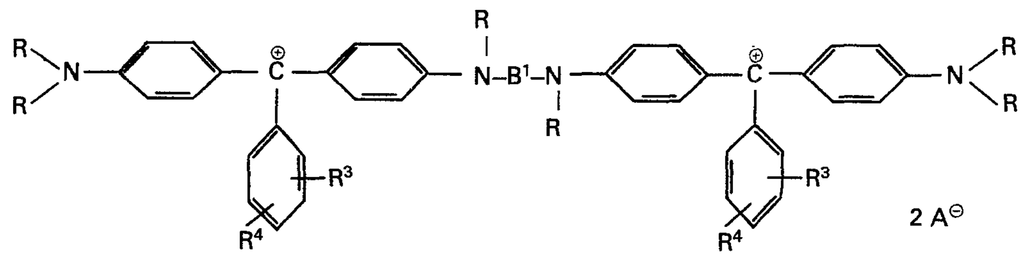

2 $A^{\ominus}$

in der die Reste

$R^3$ und $R^4$ unabhängig voneinander Wasserstoff, $C_1$- bis $C_4$-Alkoxy, Chlor, Brom oder $C_1$- bis $C_4$-Alkyl und

$B^1$ $C_2$- bis $C_6$-Alkylen, Xylylen, Butenylen oder Diphenylen sind und

R und $A^{\ominus}$ die angegebene Bedeutung haben.

Weiterhin sind besonders wertvoll die Verbindungen der Formel Ib

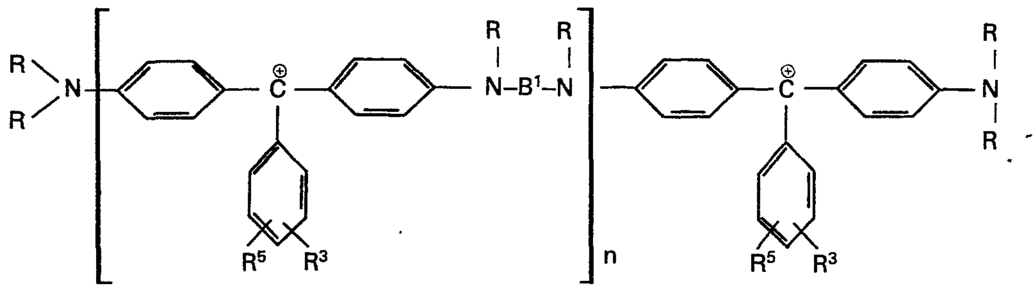

in der

$R^5$ Wasserstoff, $C_1$- bis $C_4$-Alkyl, Chlor oder ein Rest der Formel $\underset{|\atop R}{N}$–R und

n>1 sind und

$B^1$, R, $R^3$ und $A^{\ominus}$ die angegebene Bedeutung haben.

Die Verbindungen der Formel I sind violett bis grün und eignen sich vorzugsweise zum Färben von Papierstoffen, wie Holzschliff und gebleichten und ungebleichten Sulfit- und Sulfatzellstoffen. Wie aus den Färbebeispielen ersichtlich ist, zeichnen sie sich durch eine hohe Faseraffinität auch gegenüber gebleichten Zellstoffen aus. Die Zugabe von Hilfsmitteln zur Fixierung der Farbstoffe kann entfallen, so dass praktisch keine Umweltbelastung durch den Färbeprozess stattfindet. Die nächstliegenden Bis-triphenylmethan Farbstoffe sind in der FR-A-2 401 958 beschrieben worden.

Beispiel 1

80 Teile des Anilinderivats der Formel

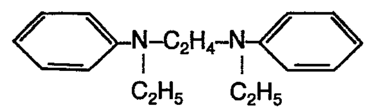

werden in 200 ml Eisessig gelöst, mit 22,5 Teilen 40%igem wässrigem Formaldehyd versetzt und zwei Stunden auf 60 °C erhitzt. Anschliessend werden 42 g Dimethylanilin zugegeben und nach Zugabe von 2 g Chloranil und 2 g des Eisenkomplexes des 1,8-Dihydro-2,3,9,10-dibenzo-1,4,8,11-tetraaza[14]annulens wird bei 40 °C Sauerstoff bis zur Aufnahme von 6,6 Litern durch die Lösung geleitet. Gegenüber den in der deutschen Patentschrift 2 152 703, der deutschen Auslegeschrift 2 334 918 und der deutschen Offenlegungsschrift 2 427 606 beschriebenen Verfahren ergeben sich bei der Umsetzung keine Besonderheiten, die Reaktion verläuft analog. Man erhält die Flüssigeinstellung des Farbstoffs der Formel

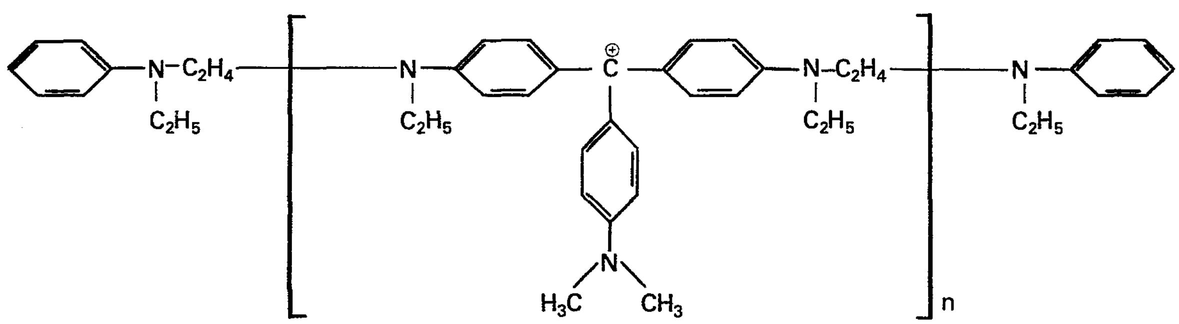

n $CH_3COO^{\ominus}$

Der blauviolette Farbstoff ist hervorragend geeignet zum Färben von Papier. Nahezu unabhängig von der Papierart erhält man farblose bis sehr schwach gefärbte Abwässer, d.h. der Farbstoff zieht praktisch vollständig aus.

Durch analoge Umsetzungen von Anilinen der Formel VI

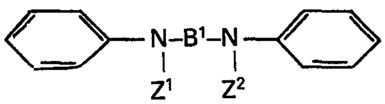

VI

mit Formaldehyd und anschliessende Kondensation mit Anilinen der Formel

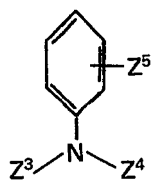

unter oxidierenden Bedingungen erhält man die in der folgenden Tabelle 1 durch Angabe der Substitution charakterisierten Farbstoffe der Formel (1)

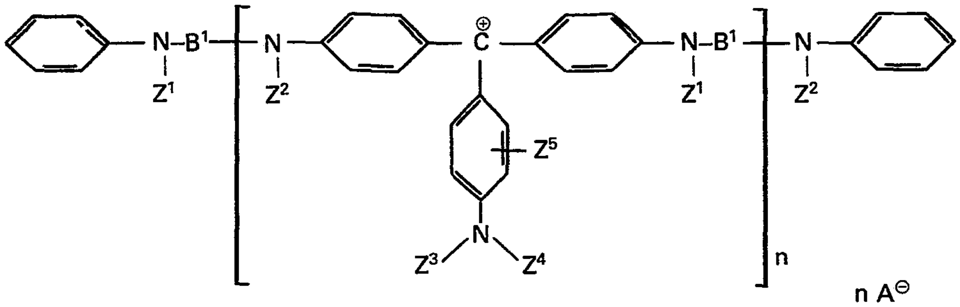

(1),

n $A^{\ominus}$

wobei sich die Stellung von $Z^5$ auf den Aminrest $-N(Z^4)-Z^3$ bezieht.

Der Wert von n wurde wegen des hohen damit verbundenen Aufwandes nicht bestimmt, da er nur einen geringen Einfluss auf das färberische Verhalten des Produkts zu haben scheint.

Die Grösse von n kann durch Zugabe von Kettenabbruchmolekülen beeinflusst werden.

Als Kettenabbruchmoleküle sind z.B. Aniline der Formel

$$R^1–AH$$

geeignet. Wie bereits erwähnt, verändert sich die Substantivität der so erhaltenen Farbstoffe nur unerheblich gegenüber solchen Farbstoffen, bei deren Synthese keine Abbruchmoleküle zugegeben wurden.

Zweckmässigerweise versetzt man eine Lösung von Anilinen der Formel VI in Eisessig oder einem anderen geeigneten organischen Lösungsmittel gleichzeitig mit einem Anilin der Formel $R^1$–AH und Formaldehyd, so dass die stationäre Konzentration an Anilin der Formel $R^1$–AH im Reaktionsgemisch gering ist und damit die Bildung von 4,4'-Diaminodiphenylmethanderivaten der Struktur

$$R^1–A–CH_2–A–R^1$$

weitgehend unterbleibt. Zufriedenstellende Ergebnisse – insbesondere bei geringeren Mengen von Anilin der Struktur $R^1$–AH – werden jedoch auch erhalten, wenn man Formaldehyd, Aniline der Formel VI und Aniline der Formel $R^1$–AH gleichzeitig kondensiert.

Diese Verfahrensweise wird im Anschluss an Tabelle 1 erläutert.

Verwendet man statt symmetrischer Aniline der Formel

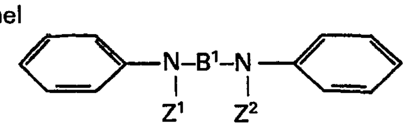

in denen $Z^1 = Z^2$ ist, unsymmetrische Aniline mit $Z^1 \neq Z^2$, unterschiedlich substituierten Benzringen oder unsymmetrischen Resten $B^1$, so erhält man polymere Farbstoffe, bei denen die Ausgangskomponenten in statistischer Reihenfolge verknüpft sind, wie dies in der nachstehenden Formel für $Z^1 \neq Z^2$ angedeutet ist:

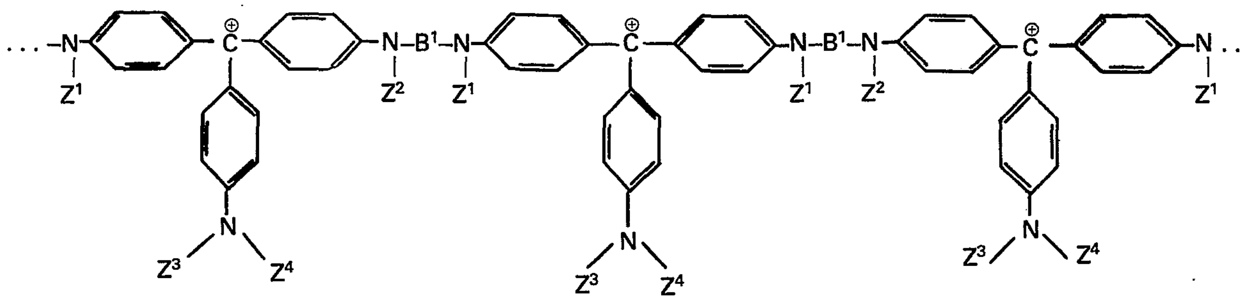

Diese Farbstoffe unterscheiden sich in ihren anwendungstechnischen Eigenschaften nicht wesentlich von Farbstoffen, die aus symmetrischen Anilinen aufgebaut sind. Als Endgruppen für Farbstoffe der Formel (I) kommen synthesebedingt die Reste

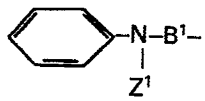

und falls Aniline der Struktur $R^1$–AH als Abbruchmoleküle zugesetzt wurden, auch Reste der Formel:

$R^1$–A–

in Betracht. Bei der Verwendung von Anilinen der Struktur

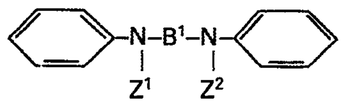

in denen $Z^1 \neq Z^2$, ergeben sich als Endgruppen zusätzlich Reste der Formel

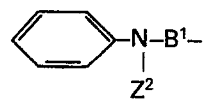

Tabelle 1
Farbstoffe der Formel (I)

| Bsp. | $Z^1$ | $Z^2$ | $Z^3$ | $Z^4$ | $Z^5$ | $B^1$ |
|---|---|---|---|---|---|---|
| 2 | $CH_3$ | $CH_3$ | $CH_3$ | $CH_3$ | H | $C_2H_4$ |
| 3 | $C_2H_5$ | $C_2H_5$ | do. | do. | H | 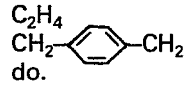 |
| 4 | do. | do. | $C_2H_5$ | $C_2H_5$ | m–Cl | do. |
| 5 | do. | do. | $CH_3$ | $CH_3$ | m–$CH_3$ | do. |
| 6 | do. | do. | do. | do. | m–Br | do. |
| 7 | do. | do. | $CH_3$ | $C_2H_4$–Cl | o–$CH_3$ | do. |
| 8 | CN–$C_2H_4$ | CN–$C_2H_4$ | do. | $C_2H_4$–OH | H | do. |
| 9 | Cl–$C_2H_4$ | Cl–$C_2H_4$ | do. | $CH_3$ | H | do. |
| 10 | $C_2H_5$ | $C_2H_5$ | do. | do. | do. | $CH_2$–CH=CH–$CH_2$ |
| 11 | do. | do. | do. | do. | do. | $(CH_2)_4$ |
| 12 | do. | do. | $CH_3$ | $C_2H_4$–CN | m–Cl | do. |
| 13 | do. | do. | do. | $C_6H_5$ | H | $C_2H_4$ |
| 14 | do. | do. | do. | p-Tolyl | m–Cl | do. |
| 15 | do. | do. | do. | $CH_3$ | H | do. |
| 16 | do. | do. | Äthyl | Äthyl | do. | do. |

Beispiel 17

84 Teile des Anilinderivats der Formel

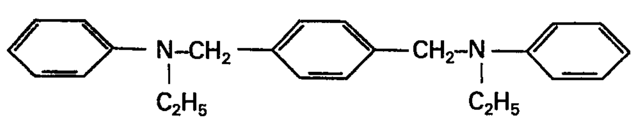

werden in 180 ml Eisessig gelöst, auf 60 °C erhitzt, im Verlauf von einer Stunde gleichzeitig mit 7,2 Teilen Dimethylanilin und 56 Teilen 40%igem wässrigem Formaldehyd versetzt und eine Stunde bei 60 °C gehalten. Anschliessend versetzt man mit 40 Teilen Dimethylanilin, erhitzt für drei Stunden auf 90 °C, kühlt auf 40 °C ab, versetzt mit 200 ml Chloroform und oxidiert unter den in Beispiel 1 genannten Bedingungen bis zur Aufnahme von 6,8 Litern Sauerstoff. Nachdem das Chloroform abdestilliert worden ist, erhält man die Flüssigeinstellung des Farbstoffs der Formel (2).

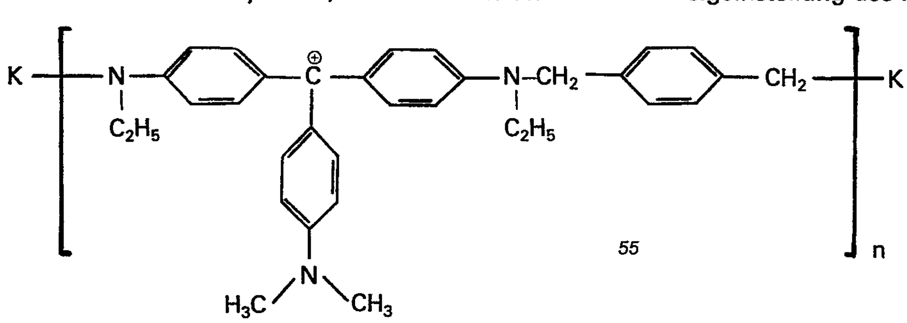

(2)

Die Reste K haben folgende Formeln

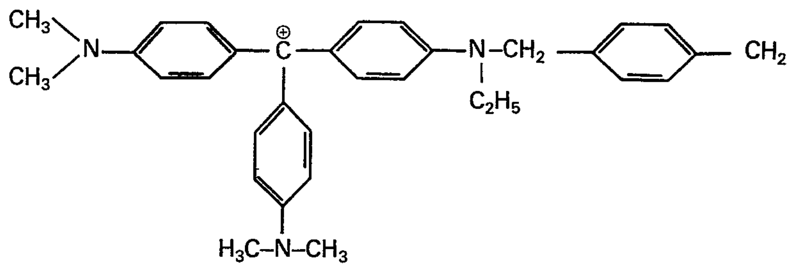

= $K^1$

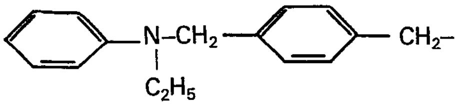

= $K^2$

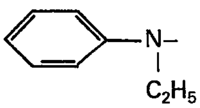

= $K^3$

und liegen unter Annahme gleicher Reaktivität im statistischen Verhältnis 2:9:9 vor.

Der blauviolette Farbstoff ist geeignet zum Färben von Papier und unterscheidet sich in seinen färberischen Eigenschaften praktisch nicht von dem Farbstoff in Beispiel 3.

In analoger Weise erhält man durch schrittweise Substitution von dimeren Anilinen der Formel VI

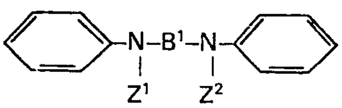

VI

durch 2 Moläquivalente monomerer Aniline der Formel

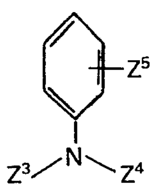

Farbstoffe, die sich in ihren färberischen Eigenschaften nur wenig von solchen Farbstoffen unterscheiden, die analog Beispiel 1–16 nur ausgehend von dimeren Anilinen aufgebaut sind. In Tabelle 2 ist am Beispiel des Farbstoffs der Formel (2) das färberische Verhalten bei Variation des Verhältnisses der Reste $K^1$ und $K^3$ demonstriert. Es fällt auf, dass bei hohem Anteil von $K^1$ die Substantivität etwas abnimmt, sie ist jedoch in jedem Fall deutlich höher als die eines vergleichbaren monomeren Farbstoffs, z.B. des Farbstoffes der Formel

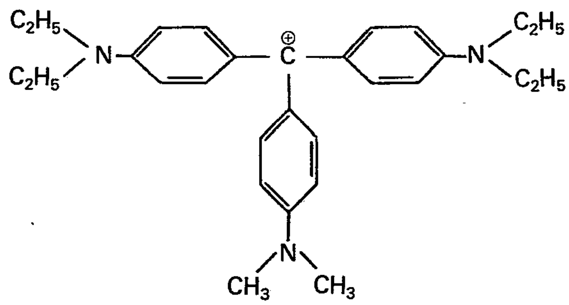

,

der auf gebleichtem Sulfitzellstoff nur sehr schwache Färbungen ergibt und bei dem sich mehr als 50% des Farbstoffs im Abwasser befinden.

Tabelle 2:
1%ige Massefärbung, gebl. Sulfitzellstoff

| Bsp. | $K^1$ | : | $K^2$ | : | $K^3$ | % Farbstoff im Abwasser |
|---|---|---|---|---|---|---|
| 18 | 1 | : | 9,5 | : | 9,5 | ⩽ 5 |
| 17 | 2 | : | 9 | : | 9 | < 5 |
| 19 | 3 | : | 8,5 | : | 8,5 | do |
| 20 | 4 | : | 8 | : | 8 | do. |
| 21 | 6 | : | 7 | : | 7 | do. |
| 22 | 8 | : | 6 | : | 6 | 5 |

Vergleiche hierzu Färbebeispiel Nr. 52.

Beispiel 23

42 Teile o-Chlorbenzaldehyd und 9 Teile Harnstoff werden bei 25 °C in 200 ml Eisessig gelöst und eine Stunde bei 25 °C gehalten. Anschliessend versetzt man mit 47 Teilen des Anilins der Formel

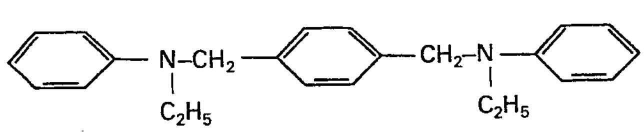

und erhitzt für eine Stunde auf 60 °C. Nach erneuter Zugabe von 47 Teilen des gleichen Anilins wird drei Stunden auf 90 °C erhitzt und dann auf 40 °C abgekühlt. Zur Auflösung des entstandenen polymeren Niederschlags versetzt man mit 200 ml Chloroform, dann oxidiert man wie in Beispiel 1 beschrieben bis zur Aufnahme von 3,3 Litern Sauerstoff. Man erhält die Flüssigeinstellung des Farbstoffs der Formel

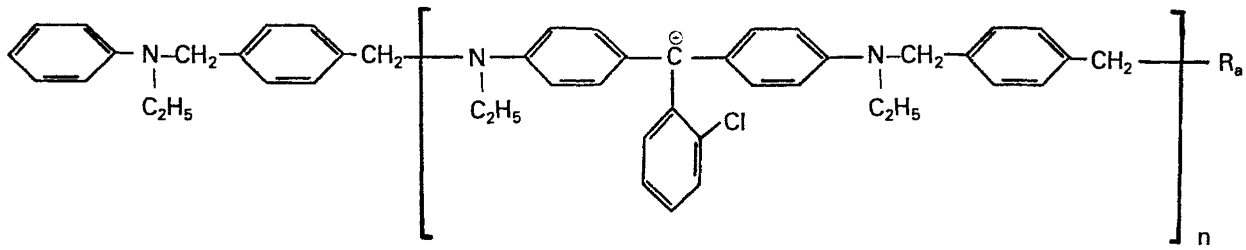

n

$R_a$ = 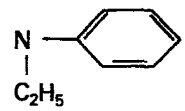

$nA^{\ominus}$

mit Acetat als Anion. Nachdem das im Reaktionsgemisch befindliche Chloroform verdampft ist, erhält man die wassermischbare Flüssigeinstellung eines brillanten blaugrünen Farbstoffs, der sich gegenüber vergleichbaren monomeren Triarylmethanfarbstoffen durch eine stark erhöhte Affinität auf allen Papierarten auszeichnet.

Durch analoge Umsetzung von Aldehyden der Formel

$A^1$–CHO

mit Harnstoff, nachfolgender zweifacher Umsetzung mit Anilinen der Formel VI und anschliessende Oxidation gelangt man zu Farbstoffen der Formel (3)

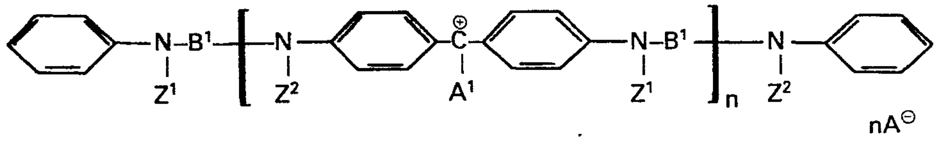 (3)

$nA^{\ominus}$

Die Farbstoffe sind in ihrer Struktur denen aus Beispiel 1 und Tabelle 1 ähnlich. Bezüglich des Wertes von n und dessen Einfluss auf das färberische Verhalten gilt das bereits im Anschluss an Beispiel 1 Erwähnte. Ebenso gelten die Überlegungen zum strukturellen Aufbau der polymeren Farbstoffe bei Einführung von unsymmetrischen Molekülteilen. Werden zur Steuerung der Kettenlänge Aniline der Formel $R^1$–AH in die Synthese eingebracht, so kommen auch hier Endgruppen in Analogie zu Beispiel 17–22 in Frage. In der folgenden Tabelle 3 sind Farbstoffe der Formel (3) angeführt, bei denen $A^{\ominus}$ Acetat ist.

Tabelle 3

| Bsp. | $Z^1$ | $Z^2$ | $B^1$ | $A^1$ | Farbe |
|---|---|---|---|---|---|
| 24 | $CH_3$ | $CH_3$ | 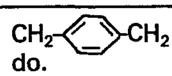 | Phenyl | grün |
| 25 | $C_2H_5$ | $C_2H_5$ | do. | do. | do. |
| 26 | $C_2H_4$–CN | $C_2H_4$–CN | do. | do. | do. |
| 27 | $C_2H_4$–OH | $C_2H_4OH$ | do. | do. | do. |
| 28 | $CH_3$ | $C_2H_5$ | do. | do. | do. |
| 29 | do. | $CH_3$ | do. | o-Chlorphenyl | blaugrün |
| 30 | $C_2H_4$–OH | $C_2H_4$–OH | do. | do. | do. |
| 31 | do. | do. | do. | o-Tolyl | do. |
| 32 | do. | do. | do. | p-Tolyl | do. |
| 33 | $CH_3$ | $CH_3$ | $C_2H_4$ | Phenyl | grün |
| 34 | do. | do. | $C_4H_8$ | do. | do. |
| 35 | do. | do. | $CH_2$–CH=CH–$CH_2$ | do. | do. |
| 36 | do. | do. | do. | o-Chlorphenyl | blaugrün |
| 37 | do. | do. | do. | p-Tolyl | do. |

Beispiel 38

32 Teile Benzaldehyd und 9 Teile Harnstoff werden bei 25 °C in 200 ml Eisessig gelöst und eine Stunde bei 25 °C gehalten. Anschliessend versetzt man mit 40 Teilen des Anilins der Formel

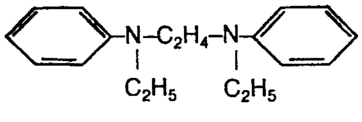

und

erhitzt für eine Stunde auf 60 °C. Nach Zugabe von 36 Teilen Dimethylanilin hält man drei Stunden bei 90 °C, kühlt auf 40 °C ab, versetzt mit 2 Teilen Chloranil und 2 Teilen des Eisenkomplexes von 1,8-Dihydro-2,3,9,10-dibenzo-1,4,8,11-tetraaza[14]annulen und leitet Sauerstoff bis zur Aufnahme von 3,4 Litern durch das Reaktionsgemisch.

Man erhält die Flüssigeinstellung des Farbstoffs der Formel

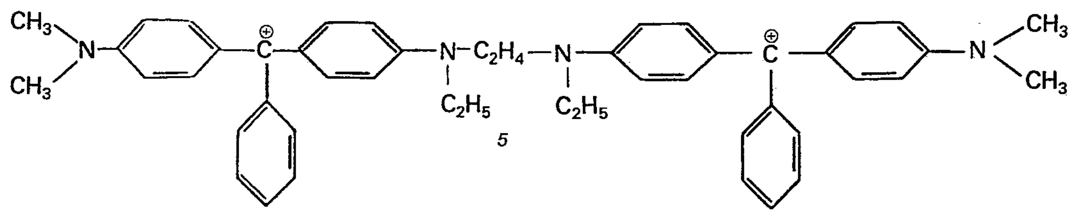

$2\ CH_3COO^{\ominus}$

Der grüne Farbstoff ist zum Färben von Papier geeignet. Gegenüber Malachitgrün besitzt er auch auf gebleichten Sulfitzellstoffen eine deutlich verbesserte Substantivität.

Durch analoge Umsetzung von Aldehyden der Formel

$A^1-CHO$

mit Harnstoff unter Bildung von Bisbenzylidenharnstoffen der Formel

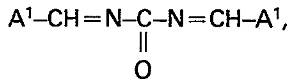

nachfolgender Reaktion mit Anilinen der Formel VI

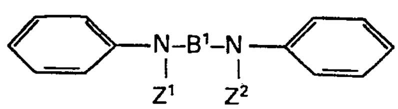 VI

und abschliessender Umsetzung mit Anilinen der Formel

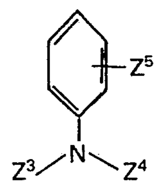

erhält man Leukoverbindungen der Formel

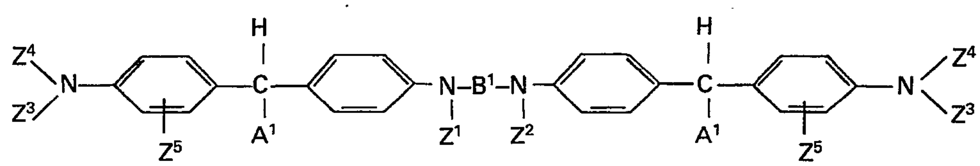

die unter oxidierenden Bedingungen zu Farbstoffen der Formel

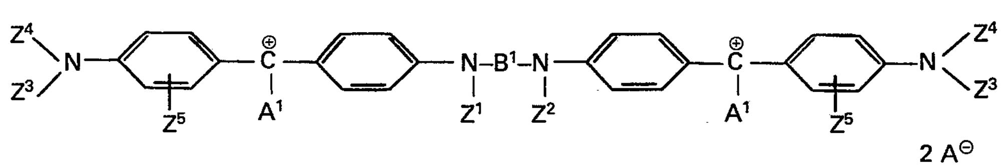

$2\ A^{\ominus}$

umgesetzt werden.

In Tabelle 4 finden sich weitere Beispiele für Farbstoffe des voranstehenden Typs, in denen $A^{\ominus}$ Acetat und $Z^5$ Wasserstoff bedeutet:

Tabelle 4

| Bsp. | $Z^1$ | $Z^2$ | $Z^3$ | $Z^4$ | $A^1$ | $B^1$ | Farbe |
|---|---|---|---|---|---|---|---|
| 39 | $CH_3$ | $CH_3$ | $CH_3$ | $CH_3$ | Phenyl | $C_2H_4$ | grün |
| 40 | do. | do. | $C_2H_5$ | $C_2H_5$ | do. | do. | do. |
| 41 | do. | do. | $C_2H_4OH$ | do. | do. | do. | do. |
| 42 | do. | do. | p-Tolyl | $CH_3$ | do. | do. | do. |
| 43 | do. | do. | $CH_3$ | do. | o-Chlorphenyl | do. | blaugrün |
| 44 | do. | do. | do. | do. | do. | 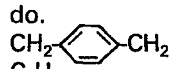 | do. |
| 45 | do. | do. | do. | do. | do. | $C_4H_8$ | do. |
| 46 | do. | do. | do. | do. | do. | $CH_2-CH=CH-CH_2$ | do. |
| 47 | do. | do. | do. | do. | do. | 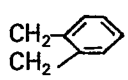 | do. |
| 48 | do. | do. | do. | do. | do. | $C_6H_{12}$ | do. |
| 49 | do. | do. | do. | do. | p-Tolyl | 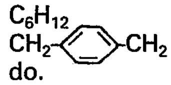 | do. |
| 50 | do. | do. | do. | do. | o-Tolyl | do. | do. |
| 51 | do. | do. | do. | do. | Phenyl | do. | do. |

Beispiel 52

1000 g einer 2,5 prozentigen Suspension von gebleichtem Sulfitzellstoff in Wasser werden mit 50 ml einer 1 prozentigen Lösung des Farbstoffs aus Beispiel 1 versetzt und 1 Minute gerührt. Es wird ein Papierbogen von 50 g/m$^2$ gebildet. Das Papier zeigt eine intensiv grüne Farbe. Das Abwasser ist sehr schwachg gefärbt.

Beispiel 53

Ersetzt man in Beispiel 52 den Farbstoff aus Beispiel 1 durch den Farbstoff aus Beispiel 17 oder 18, so erhält man praktisch farbloses Abwasser, d.h. der Farbstoff zieht quantitativ aus.

Beispiel 54

Versetzt man das Reaktionsgemisch aus Beispiel 1 an Stelle von 42 g Dimethylanilin mit 50 Teilen 1,2-Dimethylindol und verfährt weiterhin wie in Beispiel 1 angegeben, so erhält man die Flüssigeinstellung des Farbstoffs der Formel

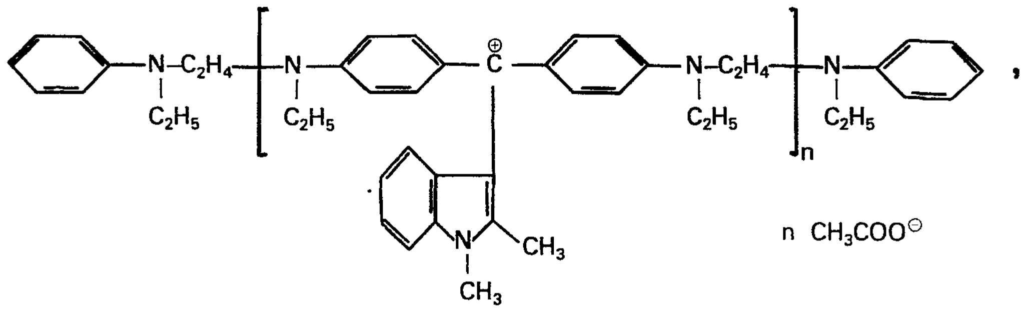

$n\ CH_3COO^{\ominus}$

der Papierstoffe in blauen Tönen anfärbt und schwach gefärbte Abwasser liefert, d.h. der Farbstoff zieht praktisch vollständig auf.

Durch analoge Umsetzung von Anilinen der Formel VI

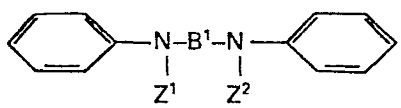

VI

mit Formaldehyd und anschliessende Kondensation mit Heterocyclen der Formel MH unter oxidierenden Bedingungen erhält man die in der folgenden Tabelle 5 durch Angabe der Substitution charakterisierten Farbstoffe der Formel

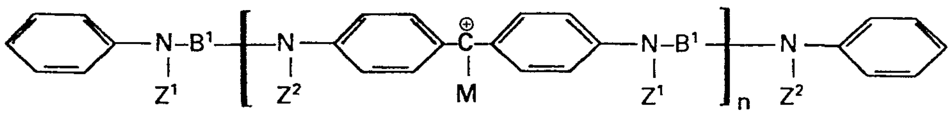

Tabelle 5

| Bsp. | $Z^1$ | $Z^2$ | M | $B^1$ | Farbe |
|---|---|---|---|---|---|
| 55 | $CH_3$ | $CH_3$ | 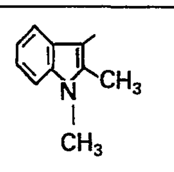 | $C_2H_4$ | blau |
| 56 | do. | do. | do. | 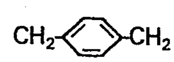 | do. |
| 57 | do. | do. | 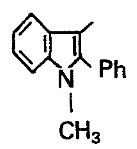 | do. | do. |
| 58 | do. | do. | 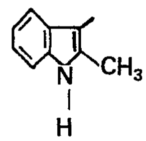 | 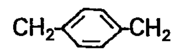 | blau |

Tabelle 5 (Fortsetzung)

| Bsp. | $Z^1$ | $Z^2$ | M | $B^1$ | Farbe |
|---|---|---|---|---|---|
| 59 | $CH_3$ | $CH_3$ | 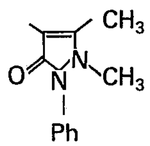 | do. | blau-violett |
| 60 | do. | do. | 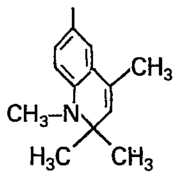 | do. | do. |
| 61 | $C_2H_5$ | $C_2H_5$ | 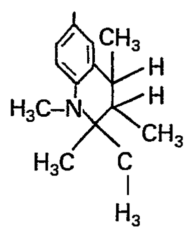 | $-C_2H_4-$ | blau-violett |

Bezüglich der Struktur und der Endgruppen der in Tabelle 5 angeführten Farbstoffe gelten in Analogie die bereits im Anschluss an Beispiel 1 angestellten Überlegungen.

Beispiel 62

Versetzt man das Reaktionsgemisch aus Beispiel 17 an Stelle von 40 Teilen Dimethylanilin mit 68 Teilen 1-Methyl-2-Phenylindol und verfährt weiterhin wie in Beispiel 17 angegeben, so erhält man die Flüssigeinstellung eines Farbstoffs der Formel

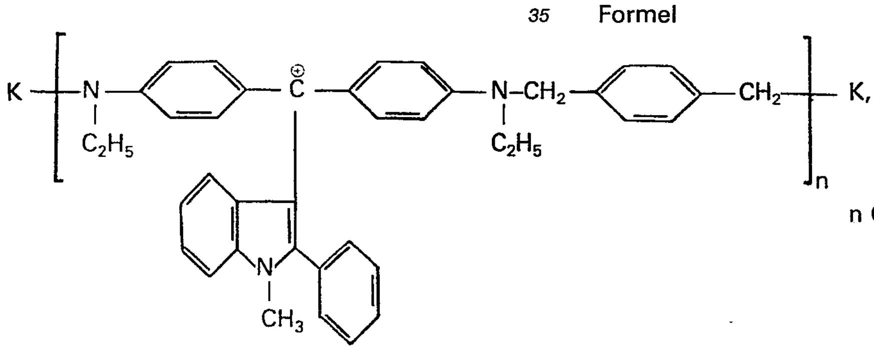

n $CH_3COO^{\ominus}$

der sich hervorragend zum Färben von Papier eignet und für den die Überlegungen zur Struktur der Reste K in gleicher Weise wie in Beispiel 17 zutreffen.

Beispiel 63

Versetzt man das Reaktionsgemisch aus Beispiel 38 an Stelle von 36 Teilen Dimethylanilin mit 43 Teilen 1,2-Dimethylindol und verfährt weiterhin wie in Beispiel 38 angegeben, so erhält man die Flüssigeinstellung eines grünen Farbstoffs der Formel

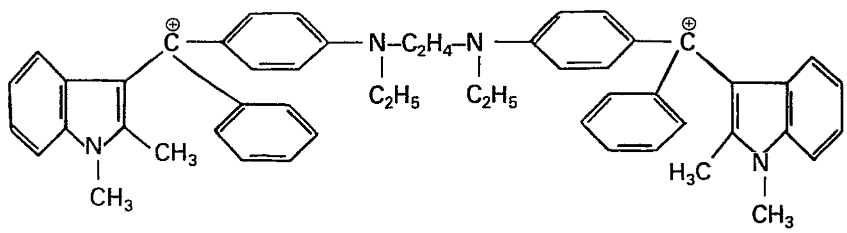 ,

2 $CH_3COO^{\ominus}$

der sich zum Färben von Papier sehr gut eignet.

Durch analoge Umsetzung von Aldehyden der Formel

$A^1$–CHO

mit Harnstoff unter Bildung von Bisbenzylidenharnstoffen der Formel

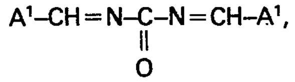

nachfolgender Reaktion mit Anilinen der Formel VI

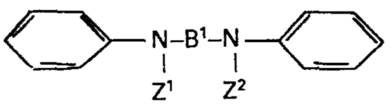 VI

und abschliessender Umsetzung mit Heteroaromaten der Formel MH erhält man Leukoverbindungen der Formel

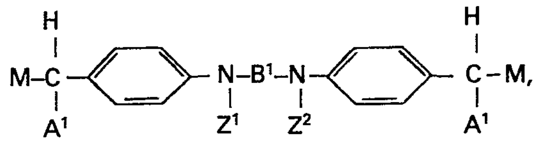

die unter oxidierenden Bedingungen zu Farbstoffen der Formel

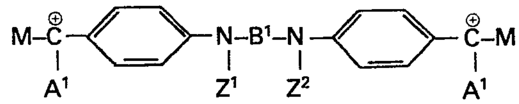

$2A^{\ominus}$

umgesetzt werden.

In Tabelle 6 finden sich weitere Beispiele für Farbstoffe des voranstehenden Typs, in denen $A^{\ominus}$ Acetat bedeutet.

Tabelle 6

| Bsp. | $Z^1$ | $Z^2$ | M | $A^1$ | $B^1$ | Farbe |
|---|---|---|---|---|---|---|
| 64 | $CH_3$ | $CH_3$ | 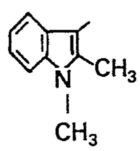 | 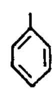 | $-C_2H_4-$ | grün |
| 65 | do. | do. | do. | do. | 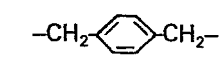 | do. |
| 66 | do. | do. | 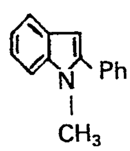 | do. | do. | do. |
| 67 | do. | do. | do. | 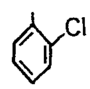 | do. | do. |
| 68 | do. | do. | do. | 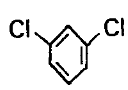 | do. | do. |

Beispiel 69

35 Teile 1,2-Dimethylindol-3-carbaldehyd und 18 Teile Harnstoff werden bei Raumtemperatur in 250 Teilen Eisessig gelöst und eine Stunde bei Raumtemperatur gehalten. Anschliessend wird auf 60 °C erhitzt und mit 29 Teilen 1,2-Dimethylindol versetzt. Nach einer Stunde bei 60 °C wird für eine Stunde auf 90 °C erhitzt, mit 27 Teilen des Anilins der Formel

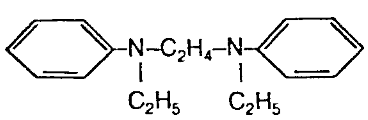

versetzt und nach Zugabe von 2 g Chloranil und 2 g des Katalysators aus Beispiel 1 bei 40 °C Sauerstoff bis zur Aufnahme von 5,0 l durch die Reaktionslösung geleitet. Man erhält die Flüssigeinstellung des Farbstoffs der Formel

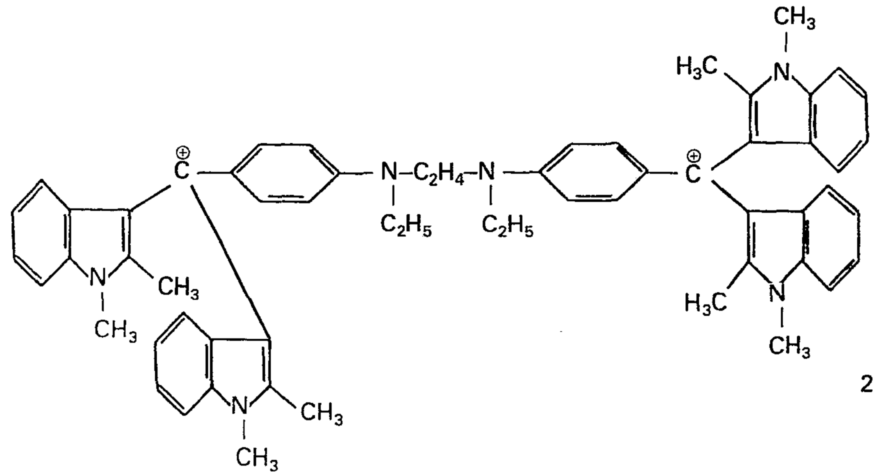

,

2 $CH_3COO^{\ominus}$

der sich hervorragend zum Färben von Papier in blaugrünen Tönen eignet.

Durch analoge Umsetzung von heterocyclischen Aldehyden der Formel

M–CHO

mit Harnstoff unter Bildung von Biskondensationsprodukten der Formel

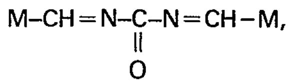

und nachfolgender Umsetzung mit Heterocyclen der Formel MH gelangt man über die Tetraaddukte der Formel

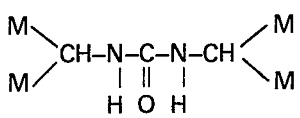

durch Umsetzung mit Anilinen der Formel

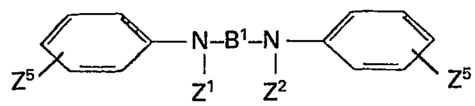

zu Leukoverbindungen der Formel

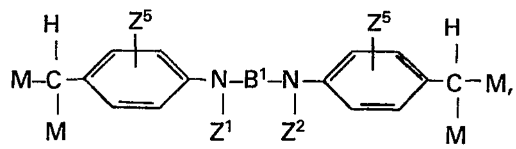

die unter oxidierenden Bedingungen Farbstoffe der Formel

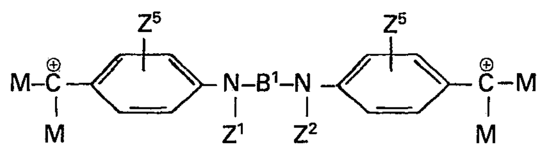

ergeben.

In Tabelle 7 finden sich weitere Beispiele des voranstehenden Typs, in denen $Z^5$ Wasserstoff und $A^{\ominus}$ Acetat bedeutet.

Tabelle 7

| Bsp. | $Z^1$ | $Z^2$ | $B^1$ | M | Farbe |
|---|---|---|---|---|---|
| 70 | $CH_3$ | $CH_3$ | 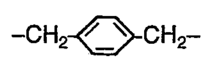 | 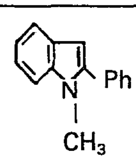 | blaugrün |
| 71 | do. | do. | $-C_4H_8-$ | do. | do. |
| 72 | $C_2H_5$ | $CH_3$ | $-CH_2-CH=CH-CH_2-$ | do. | do. |
| 73 | do. | $C_2H_5$ | 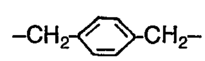 | 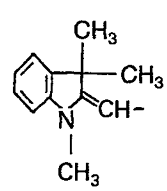 | do. |

Es versteht sich, dass durch Variation der Aldehyde M–CHO und der Heterocyclen MH auch Farbstoffe synthetisiert werden können, in denen die Reste M verschieden sind.

**Patentansprüche**

1. Kationische Farbstoffe der allgemeinen Formel

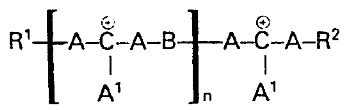

$(n+1)A^{\ominus}$

in der die Reste A, $A^1$ und B gleich oder verschieden sind und wobei

A gegebenenfalls substituiertes Arylen oder Heteroarylen,

$A^1$ für n=1 gegebenenfalls substituiertes Heteroaryl oder gegebenenfalls durch Alkyl, Aryl, Cycloalkyl, Chlor, Brom, Hydroxy, Alkoxy, Aryloxy, Nitro, Hydroxycarbonyl, Alkoxycarbonyl oder Aminocarbonyl substituiertes Aryl und für n>1 darüberhinaus durch gegebenenfalls substituiertes Amino substituiertes Aryl,

R R
| |
Bein Brückenglied der Formel $-N-B^1-N-$, in dem die Reste R gleich oder verschieden sind und Wasserstoff, gegebenenfalls durch Chlor, Brom, Hydroxy, $C_1$–$C_4$-Alkoxy, Phenyl oder Tolyl substituiertes $C_1$- bis $C_4$-Alkyl, Cycloalkyl, Phenyl oder Tolyl und

$B^1$ ein gegebenenfalls quaterniertes Brückenglied bedeuten,

$R^1$ und $R^2$ Wasserstoff, gegebenenfalls substituiertes Alkyl, Cycloalkyl, Aryl, Alkoxy oder Amino,

n eine ganze Zahl und

$A^{\ominus}$ ein Anion bedeuten.

2. Verwendung der Farbstoffe gemäss Anspruch 1 zum Färben von Papierstoffen.

**Revendications**

1. Colorants cationiques de la formuel générale

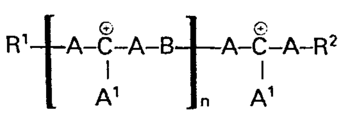

$(n+1)A^{\ominus}$

dans laquelle les restes A, $A^1$ et B peuvent être identiques ou différents et désigner:

A un groupe arylène ou hétéro-arylène eventuellement substitué;

$A^1$, dans le cas où n=1, un groupe hétéro-aryle éventuellement substitué ou un groupe aryle éventuellement alcoyl-, aryl-, cycloalcoyl-, chloro-, bromo-, hydroxy-, alcoxy-, aryloxy-, nitro-, hydroxy-carbonyl-, alcoxycarbonyl- ou aminocarbonyl-substitué, et en outre, dans le cas où n>1, un groupe aryle substitué par un groupe amino éventuellement substitué

R R
| |
Bun groupe pontal de la formule $-N-B^1-N-$, dont les restes R peuvent être identiques ou différents et représenter chacun un hydrogène ou un groupe alcoyle en $C_1$ à $C_4$ éventuellement chloro-, bromo-, hydroxy-, alcoxy (en $C_1$ à $C_4$)–, phényl- ou tolyl-substitué, cycloalcoyle, phényle ou tolyle et où $B^1$ représente un groupe pontal éventuellement quaternisé;

$R^1$ et $R^2$ désignent chacun de l'hydrogène ou un groupe alcoyle, cycloalcoyle, aryle, alcoxy ou amino éventuellement substitué;

n est un nombre entier et

$A^{\ominus}$ représente un anion.

2. Utilisation des colorants suivant la revendication 1 pour la coloration de pâtes à papier.

**Claims**

1. A cationic dye of the general formula

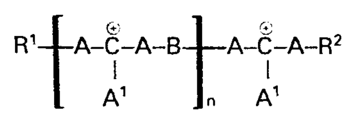

$(n+1)A^{\ominus}$

where the radicals A, $A^1$ and B are identical or different and

A is unsubstituted or substituted arylene or hetarylene

$A^1$, if n=1, is unsubstituted or substituted hetaryl or is aryl which is unsubstituted or substituted by alkyl, aryl, cycloalkyl, chlorine, bromine, hydroxyl, alkoxy, aryloxy, nitro, hydroxycarbonyl, alkoxycarbonyl or aminocarbonyl, and if n>1, $A^1$ may also be aryl substituted by unsubstituted or substituted amino,

B is a bridge membre of the formula

R R
| |
$-N-B^1-N-$, where the R's are identical or different and each is hydrogen, or is $C_1$–$C_4$-alkyl which is unsubstituted or substituted by chlorine, bromine, hydroxyl, $C_1$–$C_4$-alkoxy, phenyl or tolyl, or is cycloalkyl, phenyl or tolyl,

$B^1$ is a bridge member which may or may not be quaternized,

$R^1$ and $R^2$ are hydrogen, unsubstituted or substituted alkyl, cycloalkyl, aryl, alkoxy or amino,

n is an integer and

$A^{\ominus}$ is an anion.

2. The use of a dye as claimed in claim 1 for colouring paper pulp.